# EUROPÄISCHE PATENTSCHRIFT

(11) **EP 2 078 471 B1**
(45) Veröffentlichungstag und Bekanntmachung des Hinweises auf die Patenterteilung: **30.04.2014**
(21) Anmeldenummer: 09150224.5
(22) Anmeldetag: 08.01.2009
(51) Int. Cl.: A45C 3/04, A45C 13/26, A45C 13/28, B62B 3/18

(54) **Einkaufstragetasche**
Purchase bag
Sac pour les courses

(30) Priorität: 08.01.2008 DE 202008000256 U
(43) Veröffentlichungstag der Anmeldung: 15.07.2009
(73) Patentinhaber: Achilles, Dieter, 63263 Neu-Isenburg (DE)
(72) Erfinder: Achilles, Dieter, 63263 Neu-Isenburg (DE)
(74) Vertreter: Schlief, Thomas P.

(56) Entgegenhaltungen:
- DE-U1- 20 314 696
- DE-U1-202004 002 596
- DE-U1-202005 018 961
- FR-A- 2 888 809
- GB-A- 998 967
- GB-A- 2 325 618

## Beschreibung

Die Erfindung betrifft eine Einkaufstragetasche nach dem Oberbegriff des Anspruchs 1.

Derartige Einkaufstaschen sind bekannt. So ist beispielsweise in der DE 82 01 173.7 eine Tragetasche beschrieben, die neben Tragegriffen zusätzlich eine Einhängeeinrichtung in Form von zwei nach außen gebogenen Schienen sowie ein Transportbehältnis in typischer Taschenform zur Warenaufnahme umfasst. Eine solche in den Einkaufswagen eingehängte Tasche kann direkt an der Kasse des Supermarktes mit den gekauften Waren befüllt werden, anschließend aus dem Einkaufswagen herausgehoben und direkt in den Kofferraum eines Kfz gestellt werden. Ein umständliches Umpacken der Waren entfällt. Auch in den Schriften EP 0 976 343 B1 und DE 79 18 907 sowie denjenigen des Anmelders, DE 20 2004 008 037 und DE 20 2005 018 961, sind ähnliche Tragetaschen beschrieben.

Die FR 2 888 809 A offenbart eine Einkaufstragetasche, deren Haken durch jeweils zwei Klauen gebildet werden, die einen runden Querschnitt mit einem nach unten offenen verengten Durchgang definieren. Diese beiden Klauen können sich relativ zueinander aufweiten, wenn eine Wand eines Einkaufswagens durch den Durchgang eingeführt wird, welche breiter ist als die von den beiden Klauen definierte Öffnungsweite des Durchgangs.

Die bekannten Tragetaschen sind nicht in allen Belangen vielseitig verwendbar. Eine entsprechende Verbesserung setzt sich die vorliegende Erfindung zum Ziel.

Diese Aufgabe wird bei der Einkaufstasche der eingangs genannten Art durch die Merkmale des Anspruchs 1 gelöst.

Die Vorteile der Erfindung sind insbesondere darin zu sehen, dass die erfindungsgemäße Tasche mit optimalem Seitenhalt in Einkaufswägen mit verschiedenen Wandstärken eingehängt werden kann. Für größere Wandstärken ist ein entsprechend breiter Einführquerschnitt vorgesehen, für geringere Wandstärken ein schmalerer, wobei in letzterem Fall die Haken weiter über die Wand des Einkaufswagens geschoben werden. Würde ein einziger breiter, für alle Wandstärken von Einkaufswägen passender Einführquerschnitt gewählt, wäre bei dünneren Wändestärken wegen des seitlichen Freiraums kein sicherer Sitz der Tasche an den Einkaufswagenwänden gewährleistet. Die Haken könnten sogar aufgrund der meist vorhandenen Gummizüge an den Taschenquerseiten aus ihrer Position herausrutschen. Mittels der Erfindung kann insbesondere den mitunter bei verschiedenen Branchen unterschiedlich ausgestalteten Einkaufswägen Rechnung getragen werden. Die erfindungsgemäße Tasche kann insbesondere nicht nur in den herkömmlichen Einkaufswägen aus Draht Verwendung finden, sondern auch solchen aus Kunststoff mit dickeren oder auch dünneren Wandstärken. Somit kann dieselbe Tasche ohne Einschränkung und mit sicherer Positionierung der Tasche in den verschiedensten Einkaufswägen verwendet werden.

Bei den erfindungsgemäßen Einführquerschnitten zwischen Haken und Taschenwand kann die besagte Taschenwand insbesondere durch einen Schienenabschnitt gebildet sein. Aber auch andere Abschnitte der jeweiligen Taschenwand können zusammen mit den jeweiligen gegenüberliegenden Hakenabschnitten die Einführquerschnitte bilden.

Insbesondere hat es sich als vorteilhaft erwiesen, wenn zwei oder mehr Einführquerschnitte für zwei oder mehr unterschiedliche Einkaufswägen durch jeweilige Abstufungen realisiert werden. Die Haken können dann bis zum jeweiligen oberseitigen Anschlag der Abstufung über die Wände des jeweiligen Einkaufswagens eingeführt werden.

Alternativ sind die Einführquerschnitte durch eine kontinuierliche Verjüngung des Einführquerschnitts gebildet. Hierdurch wird die Wand des Einkaufswagens in der Verjüngung eingeklemmt.

Vorteilhafterweise sind die Haken an je einer starren Schiene angeordnet, die sich gegenüberliegend entlang der Oberkanten zweier Taschenwände verlaufen. Diese Schienen geben der Tasche in Längsrichtung des Einkaufswagens eine stabile Form, so dass sich eine große Öffnungsweite bei eingehängter Tasche ergibt.

Einer günstigeren Herstellung sowie einer Stabilitätserhöhung kommt es zugute, wenn die Haken und die Schienen einstückig ausgebildet sind.

Alternative Anordnungen und Ausgestaltungen der Haken sind ohne Weiteres möglich. Beispielsweise können je zwei Haken auf einer Taschenseite vorhanden sein, beispielsweise an entgegengesetzten Enden dieser Taschenseite, wobei der zugeordnete Griff für diese Taschenseite zwischen diesen Haken angeordnet sein kann.

Mindestens ein und vorzugsweise alle Einführquerschnitte sind vorteilhafterweise von einem vorteilhafterweise starren Teil der Taschenwand, vorzugsweise der genannten Schiene, und dem benachbarten Haken gebildet. Hierdurch ist die lichte Weite (Breite) der Einführquerschnitte genau definiert. Die Schiene kann hierfür auf einem relativ schmalen Stück im Nachbarbereich der gegenüberliegenden Haken nach unten breiter ausgebildet sein.

Die Einführquerschnitte können auch durch Haken gebildet sein, die sich vollständig, d.h. zu deren beiden Seiten, über die Einkaufswagenwände wölben und taschenseitig beispielsweise an einer separaten Schiene oder Stange befestigt sind.

Die erfindungsgemäße Einkaufstasche kann außerhalb des Einkaufswagens einfacher getragen werden, wenn die Schienen miteinander korrespondierende Koppelelemente aufweisen, vorzugsweise angeordnet in den zuvor genannten nach unten breiter ausgeführten Schienenabschnitten. Diese Schienenabschnitte können auch als Koppelabschnitte bezeichnet werden. Durch Kopplung der Schienen liegen diese aneinander an und die Öffnung ist verschlossen. Ein unerwünschter Zugriff auf den Tascheninhalt wird gleichfalls unterbunden.

Bei einer entsprechenden vorteilhaften Ausführungsform weisen die Koppelelemente entlang den Schienen angeordnete und zueinander weisende Klettelemente auf. Somit kann die Tasche im nicht eingehängten Zustand oberseitig kraftschlüssig geschlossen werden.

Alternativ können die Koppelelemente eine Hakverbindung bilden, insbesondere umfassend eine Öffnung in einer der Schienen und einen in die Öffnung eingreifenden, abgekröpften Vorsprung an der gegenüberliegenden Schiene. Der Vorsprung kann hierbei beispielsweise schräg von oben in die Öffnung eingeführt werden.

Bei einer weiteren Ausführungsform weist die besagte Hakverbindung mindestens zwei miteinander korrespondierende Koppelelemente auf, die an den Schienen und vorzugsweise an deren Oberseite sich gegenüberliegend angeordnet sind und - sich in Horizontalrichtung erstreckend - hakenförmig ausgebildet sind.

Auch kann in bekannter Weise an zumindest einem der Tragegriffe ein Klettverschluss vorgesehen sein, der die beiden Griffbereiche der Tragegriffe miteinander koppelt, um das Tragen der Tasche zu erleichtern.

In einer vorteilhaften Weiterentwicklung weist die Tasche an den Oberkanten ihrer Schmalseiten vorteilhafterweise Gummizüge auf, so dass die Tasche im eingehängten Zustand an ihren Längsseiten von den eingehängten Haken offen gespannt wird und im abgehängten Zustand eine geringe Breite aufgrund der Gummizüge einnimmt. Bei vollständig leerer Tasche lässt sich diese somit auch vorteilhafterweise um die Schienen zusammenrollen und beispielsweise in einer Hülle verstauen, die gemäß einer bevorzugten Ausführungsform von der Erfindung umfasst ist.

Bei einer vorteilhaften Ausführungsform sind die Haken zwischen den beiden Griffenden eines jeweiligen Tragegriffes angeordnet. Bei einer Ausführung der Tragegriffe aus flexiblem Stoff hängen diese üblicherweise außen an den Taschenseiten herunter, wenn die Tasche im Einkaufswagen eingehängt ist. Bei erledigtem Einkauf werden diese dann nach oben gezogen, so dass die Tasche leicht aus dem Einkaufswagen herausgehoben werden kann.

Vorteilhafte Weiterbildungen der Erfindung sind durch die Merkmale der Unteransprüche gekennzeichnet.

Im Folgenden wird die Erfindung anhand der Figuren näher erläutert, wobei gleiche Bezugszeichen für gleiche oder äquivalente Merkmale verwendet werden. Es zeigen:
- Figur 1: eine perspektivische Ansicht einer erfindungsgemäßen Einkaufstragetasche;
- Figur 2: eine schematische seitliche Schnittansicht eines Einkaufswagens mit eingehängter Einkaufstragetasche;
- Figur 3: eine vergrößerte perspektivische Ansicht eines Hakens an einer Schiene;
- Figur 4: eine in der Hakenmitte quergeschnittene Seitenansicht zweier Haken an sich gegenüberliegenden Wänden einer ersten Ausführungsform einer Einkaufstragetasche;
- Figur 5: eine in der Hakenmitte quergeschnittene Seitenansicht eines Hakens einer Taschenhälfte einer zweiten Ausführungsform einer Einkaufstragetasche, und
- Figur 6: eine Draufsicht auf eine alternative Ausführungsform einer Hakverbindung bei geschlossener Einkaufstragetasche.

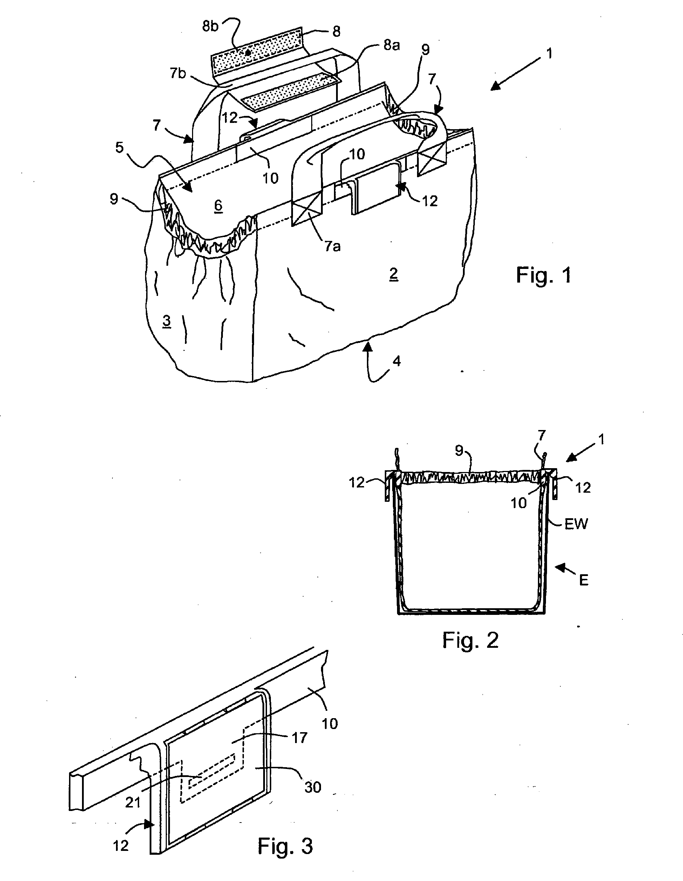

In der Figur 1 ist perspektivisch von oben eine erfindungsgemäße Einkaufstragetasche 1 dargestellt. Diese weist im Wesentlichen einen rechteckigen Querschnitt mit zwei längsseitigen Wänden 2, zwei stirnseitigen Wänden 3, einen unterseitigen Boden 4 und einer oberseitigen Öffnung 5 auf. Hierdurch wird ein tascheninnenseitiges Aufnahmefach 6 gebildet, das in weitere Fächer unterteilt sein kann. Das Taschenmaterial zur Aufnahme von Waren kann z. B. aus einem gewebten Kunststoffmaterial (beispielsweise Nylon oder Polyester) oder einer Kunststofffolie bestehen. Andere mögliche Materialien sind beispielsweise Baumwolle oder Jute.

Die Tasche 1 weist an den Oberkanten der Wände 2 jeweils einen Tragegriff 7 auf, dessen beiden Enden 7a mit Kreuznähten am Taschenstoff festgemacht sind. Im Griffbereich 7b des einen Tragegriffs 7 ist ein flexibler Stoffabschnitt 8 angenäht, der einmal innenseitig und einmal außenseitig zwei miteinander korrespondierende Klettelemente 8a, 8b aufweist, mittels derer die beiden Griffbereiche 7b der beiden Tragegriffe 7 zusammengehalten werden können.

An den Oberkanten der längsseitigen Wände 2 ist weiterhin jeweils eine Schiene 10 aus einem im Wesentlichen starren Kunststoffmaterial (oder aus Holz, Metall oder einem anderen geeigneten Werkstoff) vorgesehen, welche der Tasche 1 die nötige Stabilität verleihen. In der dargestellten Ausführungsform sind die Schienen 10 an ihren jeweiligen Stirnseiten mit dem Taschenstoff umnäht, wobei die Nähte als strichpunktierte Linien dargestellt sind. An den Oberkanten der querseitigen Wände 3 sind mit dem Taschenstoff umnähte Gummizüge 9 angeordnet, welche es erlauben, die Tasche 1 im nicht benutzen Zustand sehr klein zusammenzufalten bzw. zusammenzurollen, um sie vorzugsweise in eine passende Hülle aus beispielsweise Nylon platzsparend unterzubringen.

Mittig an den Schienen 10 sind jeweils nach außen und nach unten weisende Haken 12 einstückig angeformt, mittels derer die Tasche 1 an die Seitenwände eines in Figur 2 im Schnitt dargestellten Einkaufswagens E in bekannter Weise eingehängt werden kann. Die Seitenwände EW des Einkaufswagens ragen hierbei in den Zwischenraum zwischen dem Taschenstoff und der Innenseite der Haken 12.

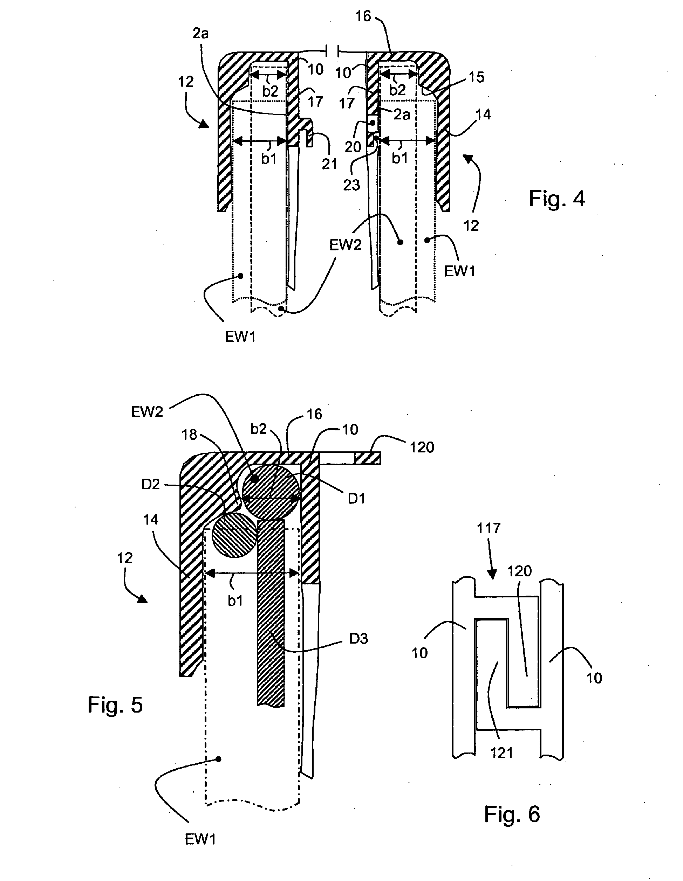

Wie genauer einer ersten Ausführungsform gemäß den Figuren 3 und 4 zu entnehmen ist, weisen die Haken 12 erfindungsgemäß an ihrer zur Taschenwand gerichteten Seite zwei unterschiedlich breite Einführquerschnitte b1, b2 auf. Diese sind durch nach außen und unten ragende Abschnitte 14 der Haken 12 einerseits und die jeweilige gegenüberliegende, im Wesentlichen sich vertikal erstreckende Taschenwand 2a andererseits definiert. Die Taschenwand 2a ist hierbei in der Hauptsache von der Schiene 10 gebildet, genauer gesagt von am unteren Schienen-Ende ausgebildeten Koppelabschnitten 17 (s. weiter unten).

Der breitere Einführquerschnitt b1 liegt hierbei tiefer als der schmalere Einführquerschnitt b2. Beide Einführquerschnitte b1, b2 sind mittels einer Abstufung 15 auf der Innenseite des Hakens 12 getrennt. Hierdurch können in dem ersten Einführquerschnitt b1 breitere Einkaufswagen-Wände EW1 (in Figur 4 punktiert dargestellt), beispielsweise solche aus Kunststoff, und in dem zweiten Einführquerschnitt b2 schmalere Einkaufswagen-Wände EW2 (in Figur 4 gestrichelt dargestellt), beispielsweise Drahtstäbe, aufgenommen werden. Der erste Einführquerschnitt b1 ist geringfügig breiter als die Stärke der Wand EW1, der zweite Einführquerschnitt b2 ist geringfügig breiter als die Stärke der Wand EW2. Somit kann die erfindungsgemäße Einkaufstragetasche 1 sehr vielseitig in verschiedene Typen von Einkaufswägen eingesetzt werden.

Die Hakenabschnitte 14 gehen in Querstege 16 über, die wiederum in die Schienen 10 übergehen. Den jeweiligen Hakenabschnitten 14 gegenüberliegend sind Koppelabschnitte 17 bis zur Unterkante der Schienen 10 ausgebildet, die kürzer und schmäler sind als die Hakenabschnitte 14 (s. Ausführungsform der Figuren 3 und 4). Um nach Herausheben aus dem Einkaufswagen E die Tasche 1 zu verschließen, sind Koppelelemente 20, 21 an den beiden Koppelabschnitten 17 vorgesehen. Das eine Koppelelement 20 ist als Öffnung 20 in einer der beiden Koppelabschnitte 17, während das andere Koppelelement 21 als Vorsprung in dem anderen Koppelabschnitt 17 ausgebildet ist. Durch leichtes Schrägstellen der Schiene 10 mit dem Vorsprung 21 kann letzterer in die Öffnung 20 eingeführt werden, wo er in einer Hinterschneidung 23 zur Anlage kommt.

Gemäß einer in der Figur 5 dargestellten zweiten Ausführungsform (nur den Haken einer Taschenhälfte darstellend) weitet sich der lichte Durchmesser oberhalb des zweiten Einführquerschnitts b2. Es entsteht hierbei eine kleine Nase 18, die in den Zwischenraum von zwei parallel laufenden Drahtstangen D1, D2 (schraffiert dargestellt mit zusätzlicher vertikaler Drahtstange D3) einer Wand EW2 eines herkömmlichen Einkaufswagens eingreift und somit zur sicheren Lagepositionierung der Tasche 1 beiträgt. Die parallelen Drahtstangen D1, D2 laufen hierbei in bekannter Weise horizontal und vertikal versetzt und sind mit mehreren der hintereinander angeordneten vertikalen Drahtstangen D3 verschweißt.

In Figur 5 ist wiederum eine weitere Einkaufswagenwand EW1 mit dickerer Wandstärke strichpunktiert dargestellt, die für den ersten Einführquerschnitt b1 ausgebildet ist und den zweiten Einführquerschnitt nicht passieren kann. Hierbei ist der erste Einführquerschnitt geringfügig breiter als die Wandstärke des Einkaufwagens.

Die zweite Ausführungsform der erfindungsgemäßen Einkaufstragetasche 1 weist eine alternative Hakverbindung zum Koppeln der beiden gegenüberliegenden Schienen 10 beim Schließen der Tasche 1 auf. Diese ist in der Figur 6 in schematischer Draufsicht dargestellt. Diese Hakverbindung umfasst zwei miteinander korrespondierende hakenförmige Koppelelemente 120, 121, die an der Oberseite der Schienen 10 sich gegenüberliegend angeordnet sind.

Die beiden hakenförmigen Koppelelemente 120, 121 erstrecken sich in Horizontalrichtung und werden miteinander verhakt, indem das eine Koppelelement 120 oder 121 von oben in das andere Koppelelement 121 oder 120 eingeführt wird. Es können zudem nicht dargestellte nasenförmige Verbreiterungen an den Hakenenden mit entsprechenden Einbuchtungen am anderen Koppelelement vorgesehen sein, welche eine Verrastung der beiden Koppelelemente bewirken.

Bei einem alternativen oder auch zusätzlichen Taschenschließmechanismus (nicht dargestellt) sind an den die Schienenstirnseiten umnähten Stoffabschnitten innenseitig jeweils Klettelemente befestigt, welche beim Aneinanderlegen der Schienen 10 miteinander verkletten und somit einen sicheren oberseitigen Schluss der Tasche 1 gewährleisten.

In den Figuren 1 und 3 ist des weiteren zu erkennen, dass an den Haken 12 Aufnahmen 30 für flächenartige Werbemittel vorgesehen sind, beispielsweise solche aus Papier oder flachem Kunststoff angeordnet, wie dies in der DE 20 2004 008 037 genauer beschrieben ist.

Die Erfindung ist nicht auf die dargestellten Ausführungsformen beschränkt, sondern umfasst auch Abwandlungen innerhalb der Ansprüche. Die Merkmale der Ansprüche sowie der verschiedenen Ausführungsformen können zudem unterschiedlich miteinander kombiniert werden. Bei einer nicht dargestellten Ausführungsform ist es möglich, dass mehr als zwei Einführquerschnitte pro Haken vorhanden sind. Im Übrigen ist es ebenfalls möglich, dass die Abstufungen oder Verjüngungen auf Seite der Taschenwand vorgesehen sind, wobei der gegenüberliegende Haken innenseitig vertikal verlaufende Wände aufweist. Auch sind Mischformen dieser beiden Ausgestaltungen möglich, d.h. Abstufungen bzw. Verjüngungen auf Seiten des jeweiligen Hakens und der gegenüberliegenden Taschenwand.

## Patentansprüche

1. Einkaufstragetasche mit einem Boden (4), sich paarweise gegenüberliegenden Taschenwänden (2, 3) sowie einer Öffnung (5) gegenüber dem Boden (4), wobei mindestens ein Aufnahmefach (6) zum Einlegen von Einkaufsgut durch die Öffnung (5) vorgesehen ist, mit mindestens einem Tragegriff (7) zum manuellen Tragen der Tasche (1) sowie mit Haken (12) zum Einhängen der Tasche (1) in Einkaufswägen (E), wobei jeweils mindestens ein nach unten gerichteter Haken (12) an der jeweiligen Außenseite zweier sich gegenüberliegender Taschenwände (2) im Bereich von deren Oberkanten angeordnet ist, wobei die besagten Haken (12) mit ihren benachbarten Taschenabschnitten (2a) übereinander angeordnete und unterschiedlich breite Einführquerschnitte (b1, b2) aufweisen, **dadurch gekennzeichnet, dass** ein unterer Einführquerschnitt (b1) breiter ist als ein oberer Einführquerschnitt (b2), so dass in dem unteren Einführquerschnitt (b1) eine breitere Einkaufswagen-Wand (EW1) und in dem oberen Einführquerschnitt (b2) eine schmalere Einkaufswagenwand (EW2) aufnehmbar ist.

2. Einkaufstragetasche nach Anspruch 1, **dadurch gekennzeichnet, dass** zwei Einführquerschnitte (b1, b2) durch eine Abstufung (15) voneinander getrennt sind.

3. Einkaufstragetasche nach Anspruch 1, **dadurch gekennzeichnet, dass** die Einführquerschnitte (b1, b2) durch eine kontinuierliche Verjüngung gebildet sind.

4. Einkaufstragetasche nach einem der vorhergehenden Ansprüche, **dadurch gekennzeichnet, dass** die Haken (12) an je einer starren Schiene (10) angeordnet sind, die sich gegenüberliegend entlang der Oberkanten zweier Taschenwände (2, 3) verlaufen.

5. Einkaufstragetasche nach Anspruch 4, **dadurch gekennzeichnet, dass** Haken (12) und Schienen (10) einstückig ausgebildet sind.

6. Einkaufstragetasche nach einem der vorhergehenden Ansprüche, **dadurch gekennzeichnet, dass** mindestens ein Einführquerschnitt (b1, b2) von einem starren Teil der Taschenwand (2a) und dem benachbarten Haken (12) gebildet ist.

7. Einkaufstragetasche nach Anspruch 4 und Anspruch 6, **dadurch gekennzeichnet, dass** der starre Teil der Taschenwand (2a) von der besagten Schiene (10) gebildet, ist.

8. Einkaufstragetasche nach Anspruch 4, **dadurch gekennzeichnet, dass** die Schiene (10) im dem Haken (12) benachbarten Bereich einen nach unten verbreiterten Koppelabschnitt (17) aufweist.

9. Einkaufstragetasche nach einem vorhergehenden Ansprüche, **dadurch gekennzeichnet, dass** der Einführquerschnitt (b1, b2) von einem sich beidseitig über die Einkaufswagen-Wände (EW1, EW2) wölbenden Haken gebildet ist.

10. Einkaufstragetasche nach Anspruch 4, **dadurch gekennzeichnet, dass** die Schienen (10) miteinander korrespondierende Koppelelemente (20, 21; 120, 121) aufweisen.

11. Einkaufstragetasche nach einem der vorhergehenden Ansprüche, **dadurch gekennzeichnet, dass** die Koppelelemente (20, 21; 120, 121) eine Hakverbindung bilden.

12. Einkaufstragetasche nach Anspruch 11, **dadurch gekennzeichnet, dass** die besagte Hakverbindung eine Öffnung (20) in einer Schiene (10) und einen in die Öffnung (20) eingreifenden, abgekröpften Vorsprung (21) an der gegenüberliegenden Schiene (10) aufweist.

13. Einkaufstragetasche nach Anspruch 11, **dadurch gekennzeichnet, dass** die besagte Hakverbindung mindestens zwei miteinander korrespondierende Koppelelemente (120, 121) aufweist, die an den Schienen (10) sich gegenüberliegend und sich in Horizontalrichtung erstreckend angeordnet und hakenförmig ausgebildet sind.

14. Einkaufstragetasche nach Anspruch 4, **dadurch gekennzeichnet, dass** die Haken (12) und/oder die Schienen (10) aus Kunststoff, Metall oder Holz bestehen.

15. Einkaufstragetasche nach einem der vorhergehenden Ansprüche, mit einer Hülle, beispielsweise aus Nylon, in welcher die Einkaufstragetasche (1) platzsparend zusammengerollt und/oder zusammengefaltet verstaut werden kann.

## Claims

1. A shopping bag having a floor (4), bag walls (2, 3) opposite each other in pairs, and an opening (5) opposite the floor (4), wherein at least one receiving compartment (6) is provided for placing shopping items through the opening (5), having at least one carry handle (7) for manually carrying the bag (1) and having hooks (12) for hanging the bag (1) in shopping carts (E), at least one hook (12) facing downward being disposed on each of the outer sides of each of two opposite bag walls (2) in the region of the upper edges thereof, said hooks (12) comprising insertion cross sections (b1, b2) with the adjacent bag sections (2a) of different widths and being disposed one above the other, **characterized in that** a lower insertion cross section (b1) is wider than an upper insertion cross section (b2), so that a wider shopping cart wall (EW1) can be received in the lower insertion cross section (b1) and a narrower shopping cart wall (EW2) can be received in the upper insertion cross section (b2).

2. The shopping bag according to claim 1, **characterized in that** two insertion cross sections (b1, b2) are separated from each other by a step (15).

3. The shopping bag according to claim 1, **characterized in that** the insertion cross sections (b1, b2) are formed by a continuous taper.

4. The shopping bag according to any one of the preceding claims, **characterized in that** the hooks (12) are each disposed on a rigid rail (10) running opposite each other along the top edges of two bag walls (2, 3).

5. The shopping bag according to claim 4, **characterized in that** the hooks (12) and rails (10) are implemented as a single piece.

6. The shopping bag according to any one of the preceding claims, **characterized in that** at least one insertion cross section (b1, b2) is formed by a rigid part of the bag wall (2a) and the adjacent hook (12).

7. The shopping bag according to claim 4 and claim 6, **characterized in that** the rigid part of the bag wall (2a) is formed by said rail (10).

8. The shopping bag according to claim 4, **characterized in that** in the region adjacent to the hook (12) the rail (10) comprises a coupling section (17) widening toward the bottom.

9. The shopping bag according to any one of the preceding claims, **characterized in that** the insertion cross section (b1, b2) is formed by a hook arching over the shopping cart walls (EW1, EW2) on both sides.

10. The shopping bag according to claim 4, **characterized in that** the rails (10) comprise coupling elements (20, 21; 120, 121) corresponding to each other.

11. The shopping bag according to any one of the preceding claims, **characterized in that** the coupling elements (20, 21; 120, 121) form a hook connection.

12. The shopping bag according to claim 11, **characterized in that** said hook connection comprises an opening (20) in one rail (10) and an offset protrusion (21) on the opposite rail (10) engaging in the opening (20).

13. The shopping bag according to claim 11, **characterized in that** said hook connection comprises at least two coupling elements (120, 121) corresponding to each other and implemented in the shape of hooks opposite each other on the rails (10) and disposed extending in the horizontal direction.

14. The shopping bag according to claim 4, **characterized in that** the hooks (12) and/or the rails (10) are made of plastic, metal, or wood.

15. The shopping bag according to any one of the preceding claims, having a sleeve, made of nylon for example, in which the rolled-up and/or folded shopping bag (1) can be stored in order to save space.

## Revendications

1. Sac de transport d'emplettes avec un fond (4), des parois de sac (2, 3) opposées en pairs les unes aux autres ainsi qu'une ouverture (5) opposée au fond (4), sachant qu'il est prévu au moins un compartiment de réception (6) pour déposer des emplettes à travers l'ouverture (5), avec au moins une poignée de transport (7) pour transporter manuellement le sac (1) ainsi que des crochets (12) pour accrocher le sac (1) dans des charriots à emplettes (E), sachant qu'au moins un crochet (12) dirigé vers le bas est respectivement disposé sur la face extérieure respective de deux parois de sac (2) disposées l'une en face de l'autre, dans la zone de leur bord supérieur, sachant que lesdits crochets (12) présentent avec leurs sections de sac (2a) adjacentes des sections d'insertion (b1, b2) disposées les unes au-dessus des autres et de largeur différente, **caractérisé en ce qu'**une section d'insertion inférieure (b1) est plus large qu'une section d'insertion supérieure (b2), de sorte que la section d'insertion inférieure (b1) puisse accueillir une paroi de charriot à emplettes plus large (EW1) et la section d'insertion supérieure (b2) puisse accueillir une paroi de charriot à emplettes plus mince (EW2).

2. Sac de transport d'emplettes selon la revendication 1, **caractérisé en ce que** deux sections d'insertion (b1, b2) sont séparées l'une de l'autre par un étagement (15).

3. Sac de transport d'emplettes selon la revendication 1, **caractérisé en ce que** les sections d'insertion (b1, b2) sont formées par un rétrécissement continu.

4. Sac de transport d'emplettes selon l'une des revendications précédentes, **caractérisé en ce que** les crochets (12) sont disposés respectivement sur des rails rigides (10), qui, disposés l'un en face de l'autre, s'étendent le long des bords supérieurs de deux parois de sac (2, 3).

5. Sac de transport d'emplettes selon la revendication 4, **caractérisé en ce que** les crochets (12) et les rails (10) se présentent sous une forme en une pièce.

6. Sac de transport d'emplettes selon l'une des revendications précédentes, **caractérisé en ce qu'**au moins une section d'insertion (b1, b2) est formée par une partie rigide de la paroi de sac (2a) et le crochet (12) adjacent.

7. Sac de transport d'emplettes selon la revendication 4 et la revendication 6, **caractérisé en ce que** la partie rigide de la paroi de sac (2a) est formée par ledit rail (10).,

8. Sac de transport d'emplettes selon la revendication 4, **caractérisé en ce que** le rail (10) présente une section de couplage (17) élargie vers le bas dans la zone adjacente au crochet (12).

9. Sac de transport d'emplettes selon l'une des revendications précédentes, **caractérisé en ce que** la section d'insertion (b1, b2) est formée par un crochet se bombant bilatéralement sur les parois du charriot à emplettes (EW1, EW2).

10. Sac de transport d'emplettes selon la revendication 4, **caractérisé en ce que** les rails (10) présentent des éléments de couplage (20, 21 ; 120, 121) correspondant les uns aux autres.

11. Sac de transport d'emplettes selon l'une des revendications précédentes, **caractérisé en ce que** les éléments de couplage (20, 21 ; 120, 121) forment une liaison à crochets.

12. Sac de transport d'emplettes selon la revendication 11, **caractérisé en ce que** ladite liaison à crochets présente une ouverture (20) dans un rail (10) et une saillie (21) entrant en prise dans l'ouverture (20) et coudée, sur le rail opposé (10).

13. Sac de transport d'emplettes selon la revendication 11, **caractérisé en ce que** ladite liaison à crochets présente au moins deux éléments de couplage (120, 121) correspondant l'un à l'autre, qui sont disposés aux rails (10) de manière opposée l'un à l'autre et allongée dans le sens horizontal et se présentent sous la forme d'un crochet.

14. Sac de transport d'emplettes selon la revendication 4, **caractérisé en ce que** les crochets (12) et/ou les rails (10) sont en matière plastique, en métal ou en bois.

15. Sac de transport d'emplettes selon l'une des revendications précédentes, avec une enveloppe, par exemple en nylon, dans laquelle le sac de transport d'emplettes (1) peut être rangé de manière peu encombrante après avoir été enroulé et/ou plié.
